# EUROPEAN PATENT APPLICATION

(11) **EP 4 625 208 A1**
(43) Date of publication of application: **01.10.2025**
(21) Application number: 23899874.4
(22) Date of filing: 30.11.2023
(51) Int. Cl.: G06F 16/957, G06F 16/958, G06F 9/451

(54) **DISPLAY METHOD FOR THEMATIC CONTENT, AND ELECTRONIC DEVICE**

(30) Priority: 07.12.2022 CN 202211563219
(71) Applicant: Huawei Technologies Co., Ltd., Shenzhen, Guangdong 518129 (CN)
(72) Inventor: CAO, Kun, Shenzhen, Guangdong 518129 (CN); SHEN, Xin, Shenzhen, Guangdong 518129 (CN); ZHANG, Yangming, Shenzhen, Guangdong 518129 (CN); ZHOU, Yudong, Shenzhen, Guangdong 518129 (CN)
(74) Representative: Maiwald GmbH
(86) International application number: PCT/CN2023/135438
(87) International publication number: WO 2024/120296

(57) **Abstract**

This application provides a topic content display method and an electronic device. The method may be applied to an application like a news application, a browser application, or a social application. **In** the method, a user may define a granularity magnitude of a topic in real time by using a granularity adjustment control displayed in an interface, and then a server generates the corresponding topic based on the granularity magnitude of the topic defined by the user and returns the corresponding topic to the user. **In** this way, the user customizes the granularity magnitude of the topic, and can adjust the granularity magnitude of the topic in real time, so that user experience can be better.

## Description

### CROSS-REFERENCE TO RELATED APPLICATIONS

This application claims priority to Chinese Patent Application No. 202211563219.3, filed with the China National Intellectual Property Administration on December 7, 2022 and entitled "TOPIC CONTENT DISPLAY METHOD AND ELECTRONIC DEVICE", which is incorporated herein by reference in its entirety.

### TECHNICAL FIELD

This application relates to the field of terminal technologies, and in particular, to a topic content display method and an electronic device.

### BACKGROUND

With rapid development of internet technologies, there are more content of news data, and news content that can be viewed by a user in a news application (application, APP) is also increasingly abundant.

Currently, after the user taps and accesses a news link, news topic content at a preset level may be displayed. For example, the user taps and accesses a sports news link on a mobile phone, the mobile phone may access an interface of the news link in response to the tap operation of the user, where related content of a basketball topic may be displayed in the interface of the news link. In other words, a current news topic can be displayed only based on a preset level, and the user can view only a fixed news topic. As a result, user experience is poor.

### SUMMARY

This application provides a topic content display method and an electronic device, to resolve a problem that a user can view only a fixed news topic, so as to improve user experience.

According to a first aspect, this application provides a topic content display method. The method includes: An electronic device displays a first interface, where the first interface includes a first topic and a granularity adjustment control; and when detecting a first operation on the granularity adjustment control, the electronic device sends a first granularity adjustment request message to a server in response to the first operation, where the first granularity adjustment request message is used to request to change the first topic in the first interface. Then, the electronic device receives content that is in a second interface and that is sent by the server, and displays the second interface, where the second interface includes a second topic. The second topic is associated with the first topic.

According to the foregoing technical solution, a user can operate the granularity adjustment control in an interface based on a requirement of the user, and then request the server to adjust a topic displayed in the interface. The server can return, based on the user operation, a topic related to the topic displayed in the current interface. Further, the electronic device can display the related topic, and the user can view a different topic. This can improve user experience.

In a possible implementation, a granularity of the first topic is a first granularity. A granularity of the second topic is a second granularity. The second granularity is greater than the first granularity, or the second granularity is less than the first granularity.

According to the foregoing technical solution, the electronic device can display topics that are at different granularities. In this way, the user can view a topic with more specific content or a topic with wider content.

In a possible implementation, the first granularity request message includes the second granularity.

Before the electronic device sends the first granularity adjustment request message to the server, the method further includes: The electronic device determines a magnitude of the second granularity based on the first operation.

According to the foregoing technical solution, the electronic device can determine, based on the operation of the user on the granularity adjustment control, a granularity magnitude of a topic that the user wants to view, and then include the granularity magnitude in the first granularity request message. In this way, the server can return corresponding topic content based on the first granularity request message.

In a possible implementation, the second interface includes the granularity adjustment control.

According to the foregoing technical solution, the second interface includes the granularity adjustment control. In this way, the user can continue to perform an operation on the second interface, and further adjust a topic displayed in the second interface.

In a possible implementation, after the electronic device displays the second interface, the method further includes:
when detecting a second operation on the granularity adjustment control, the electronic device sends a second granularity adjustment request message to the server in response to the second operation, where the second granularity adjustment request message is used to request to change the second topic in the second interface; and the electronic device receives content that is in a third interface and that is sent by the server, and displays the third interface, where the third interface includes the third topic, and the third topic is associated with the second topic.

According to the foregoing technical solution, the user can continue to operate the granularity adjustment control in the second interface based on a requirement of the user, and then request the server to adjust the second topic displayed in the second interface. The server can return, based on the user operation, the third topic related to the second topic displayed in the second interface. Further, the electronic device can display the related third topic. In this way, the user can adjust a topic granularity magnitude in real time, and user experience can be improved.

In a possible implementation, a granularity of the third topic is a third granularity.

Before the electronic device sends the second granularity adjustment request message to the server, the method further includes: The electronic device determines a magnitude of the third granularity based on the second operation.

According to the foregoing technical solution, the electronic device can determine, based on the operation of the user on the granularity adjustment control, a granularity magnitude of a topic that the user wants to view, and then include the granularity magnitude in the second granularity request message. In this way, the server can return corresponding topic content based on the second granularity request message.

In a possible implementation, before the electronic device displays the first interface, the method further includes: The electronic device receives content that is of the first topic and that is sent by the server.

In a possible implementation, before the electronic device displays the first interface, the method further includes:
the electronic device detects a third operation, where the third operation is used to trigger displaying of the granularity adjustment control; and the electronic device displays the granularity adjustment control in the first interface in response to the third operation.

According to the foregoing technical solution, the granularity adjustment control can be displayed through triggering by the user, and user experience can be improved.

In a possible implementation, the granularity adjustment control is at least one of the following controls:
a granularity increasing control and a granularity decreasing control, where the granularity increasing control is used to increase a topic granularity, and the granularity decreasing control is used to decrease the topic granularity; or an edit box input control, where the edit box input control is used to input a granularity value; or a slider bar control, where the slider bar control is used to increase or decrease the topic granularity through sliding.

According to the foregoing technical solution, the user can adjust the granularity of the topic by using the granularity increasing control (for example, a "+" control), the granularity decreasing control (for example, a "-" control), the edit box input control, or the slider bar control, and the user can customize the topic granularity magnitude. In this way, user experience can be better.

According to a second aspect, this application provides an electronic device. The electronic device includes a display, one or more processors, one or more memories, one or more sensors, a plurality of applications, and one or more computer programs. The one or more computer programs are stored in the one or more memories. The one or more computer programs include instructions. When the instructions are invoked and executed by the one or more processors, the electronic device is enabled to perform the method according to any one of the first aspect and the possible designs of the first aspect.

According to a third aspect, this application further provides an electronic device. The electronic device includes modules/units that perform the method according to any one of the first aspect and the possible designs of the first aspect. These modules/units may be implemented by hardware, or may be implemented by the hardware by executing corresponding software.

According to a fourth aspect, this application further provides a computer-readable storage medium. The computer-readable storage medium stores instructions. When the instructions are run on an electronic device, the electronic device is enabled to perform the method according to any one of the first aspect and the possible designs of the first aspect.

According to a fifth aspect, an embodiment of this application provides a computer program product. When the computer program product runs on an electronic device, the electronic device is enabled to perform the method according to any one of the first aspect and the possible designs of the first aspect in embodiments of this application.

For the second aspect to the fifth aspect and technical effect that can be achieved in the second aspect to the fifth aspect, refer to the descriptions of the technical effect that can be achieved in the possible solutions in the first aspect. Details are not described herein again.

### BRIEF DESCRIPTION OF DRAWINGS

FIG. 1 is a diagram of an application scenario according to an embodiment of this application;
FIG. 2 is a diagram of a structure of an electronic device according to an embodiment of this application;
FIG. 3A is a diagram of a software architecture according to an embodiment of this application;
FIG. 3B is a block diagram of a software architecture according to an embodiment of this application;
FIG. 4 is a flowchart of a topic content display method according to an embodiment of this application;
FIG. 5 is a diagram of a user interface according to an embodiment of this application;
FIG. 6 is a diagram of a node relationship according to an embodiment of this application;
FIG. 7 is a diagram of a user interface according to an embodiment of this application;
FIG. 8 is a diagram of a user interface according to an embodiment of this application;
FIG. 9 is a diagram of a user interface according to an embodiment of this application; and
FIG. 10 is a diagram of a structure of another electronic device according to an embodiment of this application.

### DESCRIPTION OF EMBODIMENTS

The following describes technical solutions in embodiments of this application in detail with reference to accompanying drawings in the following embodiments of this application.

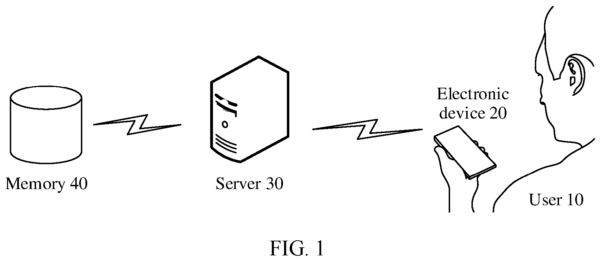

FIG. 1 is a diagram of an application scenario according to an embodiment of this application. As shown in FIG. 1, the scenario may include a user 10, an electronic device 20, a server 30, and a memory 40. The user 10 may be a user who operates the electronic device 20. The server 30 may be a single server, or may be a server cluster. In addition, the server 30 may alternatively be a cloud server or the like. This is not limited in this application. The memory 40 is configured to store topic data, for example, real-time news data. The memory 40 may be located in the server 30, or may be an independent storage device. It should be understood that the electronic device 20 may be a mobile phone, a tablet computer, a notebook computer, a personal computer, or the like, and the server 30 may be any server device that can support a corresponding topic generation algorithm.

In some embodiments, the user 10 may adjust, on the electronic device 20, a granularity of a topic displayed in a current interface, for example, may adjust a granularity magnitude by inputting a granularity value. Then, the electronic device 20 may send a topic granularity adjustment request message to the server 30 in response to a tap operation. The topic granularity adjustment request message may be used to request the server 30 to change the topic displayed on the current interface. Correspondingly, after receiving the topic granularity adjustment request message, the server 30 may generate, based on a new topic granularity magnitude, topic content corresponding to the new topic granularity magnitude. Finally, the server 30 sends the topic content corresponding to the new topic granularity magnitude to the electronic device 20, so that the electronic device 20 displays the topic content corresponding to the new topic granularity magnitude.

In the diagram shown in FIG. 1, a communication connection is established between the electronic device 20 and the server 30 through a communication network. The communication network may be a local area network, or may be a wide area network transferred via a relay (relay) device, or the like. When the communication network is a local area network, for example, the communication network may be a short-range communication network like a wireless fidelity (wireless fidelity, Wi-Fi) hotspot network, a Bluetooth (Bluetooth, BT) network, or a near field communication (near field communication, NFC) network. When the communication network is a wide area network, for example, the communication network may be a 3rd generation mobile communication technology (3rd generation wireless telephone technology, 3G) network, a 4th generation mobile communication technology (the 4th generation mobile communication technology, 4G) network, the 5th generation mobile communication technology (5th generation mobile communication technology, 5G) network, a future evolved public land mobile network (public land mobile network, PLMN), or the internet.

It should be understood that an application program (application for short) in embodiments of this application is a software program that can implement one or more specific functions. Usually, a plurality of applications may be installed on the electronic device, for example, a camera application, a messaging application, a mailbox application, a video application, and a music application. An application mentioned below may be an application already installed before delivery of the electronic device, or may be an application downloaded from a network or obtained from another electronic device by a user during use of the electronic device.

It should be understood that a topic content display method provided in embodiments of this application is applicable to any electronic device having a display, for example, a mobile phone, a tablet computer, a wearable device (for example, a watch, a band, a smart helmet, or smart glasses), a vehicle-mounted device, an augmented reality (augmented reality, AR)/virtual reality (virtual reality, VR) device, a notebook computer, an ultra-mobile personal computer (ultra-mobile personal computer, UMPC), a netbook, or a personal digital assistant (personal digital assistant, PDA). This is not limited in embodiments of this application. The electronic device in embodiments of this application may be a foldable electronic device, for example, a foldable mobile phone or a foldable tablet computer. This is not limited in this application. In addition, an example embodiment of the electronic device includes but is not limited to an electronic device using iOS^{®}, Android^{®}, Microsoft^{®}, HarmonyOS^{®}, or another operating system.

In addition, the topic content display method provided in embodiments of this application may be applied to an application like a news application, a browser application, or a social application.

The following uses the mobile phone as an example to describe a structure of the electronic device 20 in the scenario shown in FIG. 1.

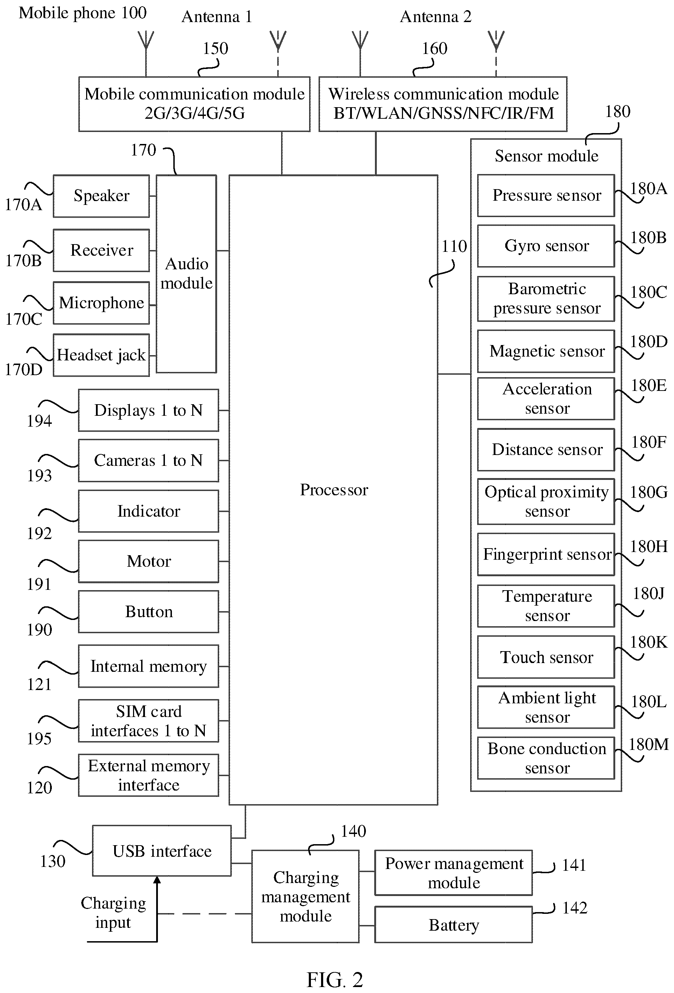

As shown in FIG. 2, a mobile phone 100 may include a processor 110, an external memory interface 120, an internal memory 121, a universal serial bus (universal serial bus, USB) interface 130, a charging management module 140, a power management module 141, a battery 142, an antenna 1, an antenna 2, a mobile communication module 150, a wireless communication module 160, an audio module 170, a speaker 170A, a receiver 170B, a microphone 170C, a headset jack 170D, a sensor module 180, a button 190, a motor 191, an indicator 192, a camera 193, a display 194, a subscriber identification module (subscriber identification module, SIM) card interface 195, and the like. The sensor module 180 may include a pressure sensor 180A, a gyro sensor 180B, a barometric pressure sensor 180C, a magnetic sensor 180D, an acceleration sensor 180E, a distance sensor 180F, an optical proximity sensor 180G, a fingerprint sensor 180H, a temperature sensor 180J, a touch sensor 180K, an ambient light sensor 180L, a bone conduction sensor 180M, and the like.

The processor 110 may include one or more processing units. For example, the processor 110 may include an application processor (application processor, AP), a modem processor, a graphics processing unit (graphics processing unit, GPU), an image signal processor (image signal processor, ISP), a controller, a memory, a video codec, a digital signal processor (digital signal processor, DSP), a baseband processor, and/or a neural-network processing unit (neural-network processing unit, NPU). Different processing units may be independent devices, or may be integrated into one or more processors. The controller may be a neural center and a command center of the mobile phone 100. The controller may generate an operation control signal based on an instruction operation code and a time sequence signal, to complete control of instruction fetching and instruction execution. A memory may be further disposed in the processor 110, and is configured to store instructions and data. In some embodiments, the memory in the processor 110 is a cache. The memory may store an instruction or data just used or cyclically used by the processor 110. If the processor 110 needs to use the instruction or the data again, the processor may directly invoke the instruction or the data from the memory. This avoids repeated access, and reduces waiting time of the processor 110, thereby improving system efficiency.

The USB interface 130 is an interface that conforms to a USB standard specification, and may be specifically a mini USB interface, a micro USB interface, a USB Type-C interface, or the like. The USB interface 130 may be configured to connect to a charger to charge the mobile phone 100, or may be configured to perform data transmission between the mobile phone 100 and a peripheral device. The charging management module 140 is configured to receive a charging input from a charger. The power management module 141 is configured to connect to the battery 142, the charging management module 140, and the processor 110. The power management module 141 receives an input from the battery 142 and/or an input from the charging management module 140, to supply power to the processor 110, the internal memory 121, an external memory, the display 194, the camera 193, the wireless communication module 160, and the like.

A wireless communication function of the mobile phone 100 may be implemented via the antenna 1, the antenna 2, the mobile communication module 150, the wireless communication module 160, the modem processor, the baseband processor, and the like. The antenna 1 and the antenna 2 are configured to: transmit and receive electromagnetic wave signals. Each antenna in the mobile phone 100 may be configured to cover one or more communication frequency bands. Different antennas may be further multiplexed, to improve antenna utilization. For example, the antenna 1 may be multiplexed as a diversity antenna in a wireless local area network. In some other embodiments, the antenna may be used in combination with a tuning switch.

The mobile communication module 150 may provide a solution that is applied to the mobile phone 100 and that includes wireless communication such as 2G, 3G, 4G, and 5G. The mobile communication module 150 may include at least one filter, a switch, a power amplifier, a low noise amplifier (low noise amplifier, LNA), and the like. The mobile communication module 150 may receive an electromagnetic wave through the antenna 1, perform processing such as filtering and amplification on the received electromagnetic wave, and transmit a processed electromagnetic wave to the modem processor for demodulation. The mobile communication module 150 may further amplify a signal modulated by the modem processor, and convert an amplified signal into an electromagnetic wave for radiation through the antenna 1. In some embodiments, at least a part of functional modules of the mobile communication module 150 may be disposed in the processor 110. In some embodiments, at least a part of functional modules of the mobile communication module 150 may be disposed in a same device as at least a part of modules of the processor 110.

The wireless communication module 160 may provide a solution that is applied to the mobile phone 100 and that includes wireless communication such as a wireless local area network (wireless local area networks, WLAN) (for example, a wireless fidelity (wireless fidelity, Wi-Fi) network), Bluetooth (Bluetooth, BT), a global navigation satellite system (global navigation satellite system, GNSS), frequency modulation (frequency modulation, FM), near field communication (near field communication, NFC), and an infrared (infrared, IR) technology. The wireless communication module 160 may be one or more devices integrated into at least one communication processing module. The wireless communication module 160 receives an electromagnetic wave through the antenna 2, performs frequency modulation and filtering on an electromagnetic wave signal, and sends a processed signal to the processor 110. The wireless communication module 160 may further receive a to-be-sent signal from the processor 110, perform frequency modulation and amplification on the signal, and convert a processed signal into an electromagnetic wave for radiation through the antenna 2.

In some embodiments, in the mobile phone 100, the antenna 1 is coupled to the mobile communication module 150, and the antenna 2 is coupled to the wireless communication module 160. In this way, the mobile phone 100 can communicate with a network and another device by using a wireless communication technology. The wireless communication technology may include a global system for mobile communications (global system for mobile communications, GSM), a general packet radio service (general packet radio service, GPRS), code division multiple access (code division multiple access, CDMA), wideband code division multiple access (wideband code division multiple access, WCDMA), time-division code division multiple access (time-division code division multiple access, TD-SCDMA), long term evolution (long term evolution, LTE), a 5th generation (the fifth generation, 5G) mobile communication system, a future communication system, for example, a 6th generation (6th generation, 6G) system, BT, a GNSS, a WLAN, NFC, FM, an IR technology, and/or the like. The GNSS may include a global positioning system (global positioning system, GPS), a global navigation satellite system (global navigation satellite system, GLONASS), a BeiDou navigation satellite system (BeiDou navigation satellite system, BDS), a quasi-zenith satellite system (quasi-zenith satellite system, QZSS), and/or a satellite based augmentation system (satellite based augmentation system, SBAS).

The display 194 is configured to display a display interface of an application and the like. The display 194 includes a display panel. The display panel may be a liquid crystal display (liquid crystal display, LCD), an organic light-emitting diode (organic light-emitting diode, OLED), an active-matrix organic light-emitting diode (active-matrix organic light-emitting diode, AMOLED), a flexible light-emitting diode (flex light-emitting diode, FLED), a mini-LED, a micro-LED, a micro-OLED, a quantum dot light-emitting diode (quantum dot light-emitting diodes, QLED), or the like. In some embodiments, the mobile phone 100 may include one or N displays 194, where N is a positive integer greater than 1. In this embodiment of this application, the display 194 may be configured to display a home screen, an application interface, a granularity adjustment control, and the like.

The camera 193 is configured to capture a static image or a video. The camera 193 may include a front-facing camera and a rear-facing camera.

The internal memory 121 may be configured to store computer-executable program code. The executable program code includes instructions. The processor 110 runs the instructions stored in the internal memory 121, to perform various function applications of the mobile phone 100 and data processing. The internal memory 121 may include a program storage area and a data storage area. The program storage area may store an operating system, software code of at least one application (for example, an iQIYI application or a WeChat application), and the like. The data storage area may store data (for example, an image and a video) generated during use of the mobile phone 100, and the like. In addition, the internal memory 121 may include a high-speed random access memory, and may further include a non-volatile memory, for example, at least one magnetic disk storage device, a flash memory device, or a universal flash storage (universal flash storage, UFS).

The external memory interface 120 may be configured to connect to an external storage card, for example, a micro SD card, to extend a storage capability of the mobile phone 100. The external storage card communicates with the processor 110 through the external memory interface 120, to implement a data storage function. For example, files such as a picture and a video are stored in the external storage card.

The mobile phone 100 may implement an audio function, for example, music playing or recording via the audio module 170, the speaker 170A, the receiver 170B, the microphone 170C, the headset jack 170D, the application processor, and the like.

The pressure sensor 180Ais configured to sense a pressure signal, and may convert the pressure signal into an electrical signal. In some embodiments, the pressure sensor 180A may be disposed on the display 194. The gyro sensor 180B may be configured to determine a motion posture of the mobile phone 100. In some embodiments, angular velocities of the mobile phone 100 around three axes (namely, x, y, and z axes) may be determined by via the gyro sensor 180B.

The gyro sensor 180B may be configured to determine the motion posture of the mobile phone 100. In some embodiments, the angular velocities of the mobile phone 100 around the three axes (namely, the x, y, and z axes) may be determined by via the gyro sensor 180B. The gyro sensor 180B may be configured to implement image stabilization during photographing. For example, when a shutter is pressed, the gyro sensor 180B detects an angle at which the mobile phone 100 shakes, calculates, based on the angle, a distance for which a lens module needs to compensate, and allows a lens to cancel the shake of the mobile phone 100 through reverse motion, to implement image stabilization. The gyro sensor 180B may be further used in a navigation scenario and a somatic game scenario.

The barometric pressure sensor 180C is configured to measure barometric pressure. In some embodiments, the mobile phone 100 calculates an altitude based on a barometric pressure value measured by the barometric pressure sensor 180C, to assist in positioning and navigation. The magnetic sensor 180D includes a Hall sensor. The mobile phone 100 may detect opening or closing of a flip cover via the magnetic sensor 180D. In some embodiments, when the mobile phone 100 is a flip phone, the mobile phone 100 may detect opening or closing of the flip cover based on the magnetic sensor 180D. Further, a feature like automatic unlocking of the flip cover is set based on a detected opening or closing state of the flip cover. The acceleration sensor 180E may detect magnitudes of accelerations of the mobile phone 100 in various directions (generally on three axes), may detect a magnitude and a direction of gravity when the mobile phone 100 is stationary, may be further configured to identify a posture of the electronic device, and is used in an application like switching between a landscape mode and a portrait mode or a pedometer.

The distance sensor 180F is configured to measure a distance. The mobile phone 100 may measure a distance in an infrared or a laser manner. In some embodiments, in a photographing scenario, the mobile phone 100 may measure a distance via the distance sensor 180F, to implement quick focusing. The optical proximity sensor 180G may include, for example, a light-emitting diode (LED) and an optical detector, for example, a photodiode. The light-emitting diode may be an infrared light-emitting diode. The mobile phone 100 emits infrared light via the light-emitting diode. The mobile phone 100 detects infrared reflected light from a nearby object via the photodiode. When sufficient reflected light is detected, it may be determined that there is an object near the mobile phone 100. When insufficient reflected light is detected, the mobile phone 100 may determine that there is no object near the mobile phone 100. The mobile phone 100 may detect, via the optical proximity sensor 180G, that the user holds the mobile phone 100 close to an ear to make a call, to automatically turn off a screen for power saving. The optical proximity sensor 180G may also be used in a flip cover mode or a pocket mode to automatically perform screen unlocking or locking.

The ambient light sensor 180L is configured to sense ambient light brightness. The mobile phone 100 may adaptively adjust brightness of the display 194 based on the sensed ambient light brightness. The ambient light sensor 180L may also be configured to automatically adjust white balance during photographing. The ambient light sensor 180L may further cooperate with the optical proximity sensor 180G to detect whether the mobile phone 100 is in a pocket, to avoid an accidental touch. The fingerprint sensor 180H is configured to collect a fingerprint. The mobile phone 100 may use a feature of the collected fingerprint to implement fingerprint-based unlocking, application lock access, fingerprint-based photographing, fingerprint-based call answering, and the like.

The temperature sensor 180J is configured to detect a temperature. In some embodiments, the mobile phone 100 executes a temperature processing strategy by using the temperature detected by the temperature sensor 180J. For example, when the temperature reported by the temperature sensor 180J exceeds a threshold, the mobile phone 100 reduces performance of a processor near the temperature sensor 180J, to reduce power consumption and implement heat protection. In some other embodiments, when the temperature is less than another threshold, the mobile phone 100 heats the battery 142, to avoid an abnormal shutdown of the mobile phone 100 caused by a low temperature. In some other embodiments, when the temperature is less than still another threshold, the mobile phone 100 boosts an output voltage of the battery 142, to avoid an abnormal shutdown caused by a low temperature.

The touch sensor 180K is also referred to as a "touch panel". The touch sensor 180K may be disposed on the display 194, and the touch sensor 180K and the display 194 form a touchscreen that is also referred to as a "touch screen". The touch sensor 180K is configured to detect a touch operation performed on or near the touch sensor. The touch sensor may transfer the detected touch operation to the application processor, to determine a type of the touch event. A visual output related to the touch operation may be provided via the display 194. In some other embodiments, the touch sensor 180K may alternatively be disposed on a surface of the mobile phone 100 at a location different from that of the display 194. In some embodiments of this application, the touch sensor 180K may detect a gesture operation of the user on the display, for example, may detect a tap operation of the user on a granularity adjustment control "+". Then, the mobile phone 100 may send a topic granularity adjustment request message to a server in response to the tap operation. Correspondingly, the server may feed back, to the mobile phone 100, topic content whose topic granularity is increased, and the mobile phone 100 may display the topic content whose topic granularity is increased.

The bone conduction sensor 180M may obtain a vibration signal. In some embodiments, the bone conduction sensor 180M may obtain a vibration signal of a vibration bone of a human vocal-cord part. The bone conduction sensor 180M may also be in contact with a body pulse, to receive a blood pressure beating signal.

The button 190 includes a power button, a volume button, and the like. The button 190 may be a mechanical button, or may be a touch button. The mobile phone 100 may receive a button input, and generate a button signal input related to a user setting and function control of the mobile phone 100. The motor 191 may generate a vibration prompt. The motor 191 may be configured to provide an incoming call vibration prompt, or may be configured to provide a touch vibration feedback. For example, touch operations performed on different applications (for example, a photographing application and an audio playing application) may correspond to different vibration feedback effect. The indicator 192 may be an indicator light, and may be configured to indicate a charging status and a power change, or may be configured to indicate a message, a missed call, a notification, and the like. The SIM card interface 195 is configured to connect to a SIM card. The SIM card may be inserted into the SIM card interface 195 or pulled out of the SIM card interface 195, to implement contact with or separation from the mobile phone 100.

It may be understood that the components shown in FIG. 2 constitute no specific limitation on the mobile phone. The mobile phone may alternatively include more or fewer components than those shown in the figure, or some of the components may be combined, or some of the components may be split, or there may be different arrangements of the components. In the following embodiments, the mobile phone 100 shown in FIG. 2 is used as an example for description.

A software system of the mobile phone 100 may use a layered architecture, and includes an event-driven architecture, a microkernel architecture, a micro service architecture, or a cloud architecture. In embodiments of this application, an Android^{®} system with a layered architecture is used as an example to describe a software structure of the mobile phone 100. It should be understood that the system in embodiments of this application may alternatively be HarmonyOS^{®}. This is not limited in this application.

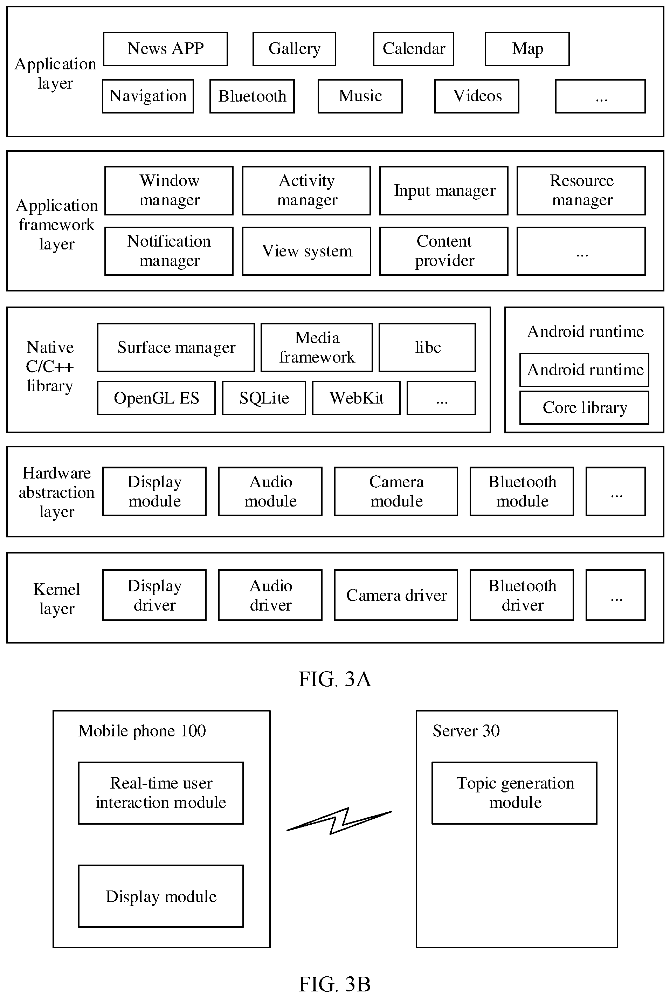

FIG. 3A is a block diagram of the software structure of the mobile phone 100 according to an embodiment of this application. In the layered architecture, software is divided into several layers. Each layer has a clear role and task. The layers communicate with each other through a software interface. In some embodiments, the Android system is divided into five layers: an application layer, an application framework layer, Android runtime (Android runtime, ART) and a native C/C++ library, a hardware abstraction layer (hardware abstract layer, HAL), and a kernel layer from top to bottom.

The application layer may include a series of application packages. As shown in FIG. 3A, the application packages may include applications such as a news APP, Gallery, Calendar, Map, Navigation, Bluetooth, Music, and Videos.

The application framework layer provides an application programming interface (application programming interface, API) and a programming framework for the application at the application layer. The application framework layer includes some predefined functions.

As shown in FIG. 3A, the application framework layer may include a window manager, a content provider, a view system, a resource manager, a notification manager, an activity manager, an input manager, and the like.

The window manager provides a window manager service (window manager service, WMS). The WMS may be used for window management, window animation management, and surface management, and may be used as a transit point for an input system.

The content provider is used to store and obtain data, and enable the data to be accessible by an application. The data may include a video, an image, an audio, calls that are made and received, a browsing history and a bookmark, a phone book, and the like.

The view system includes a visual control, for example, a text display control or a picture display control. The view system may be configured to construct an application. A display interface may include one or more views. For example, a display interface including a messaging notification icon may include a text display view and a picture display view.

The resource manager provides, for an application, various resources such as a localized character string, an icon, a picture, a layout file, and a video file.

The notification manager enables an application to display notification information in a status bar, may be used to convey a notification message, and may automatically disappear after a short pause without requiring user interaction. For example, the notification manager is used to notify download completion and provide a message notification. The notification manager may alternatively be a notification that appears in a top status bar of the system in a form of a graph or a scroll bar text, for example, a notification of an application that runs in a background, or may be a notification that appears on a screen in a form of a dialog window. For example, text information is prompted in the status bar, an alert tone is made, the electronic device vibrates, or an indicator light blinks.

The activity manager may provide an activity manager service (Activity Manager Service, AMS). The AMS may be used to start, switch, and schedule a system component (for example, an activity, a service, a content provider, or a broadcast receiver), and manage and schedule an application process.

The input manager may provide an input manager service (Input Manager Service, IMS). The IMS may be used for system input management, for example, a touchscreen input, a button input, or a sensor input. The IMS obtains an event from an input device node and allocates the event to an appropriate window through interaction with the WMS.

The Android runtime includes a core library and Android runtime. The Android runtime is responsible for converting source code into machine code. The Android runtime mainly includes an ahead-of-time (ahead-of-time, AOT) compilation technology and a just-in-time (just in time, JIT) compilation technology.

The core library is mainly used to provide a function of a basic Java library, for example, a library like a basic data structure library, a mathematics library, an I/O library, a tool library, a database, or a network library. The core library provides an API for the user to develop an Android application.

A native C/C++ library may include a plurality of functional modules, for example, a surface manager (surface manager), a media framework (Media Framework), libc, OpenGL ES, SQLite, and WebKit.

The surface manager is used to manage a display subsystem and provide fusion of 2D and 3D layers for a plurality of applications. The media framework supports playback and recording in a plurality of commonly used audio and video formats, a static image file, and the like. The media library may support a plurality of audio and video coding formats, for example, MPEG-4, H.264, MP3, AAC, AMR, JPG, and PNG. The OpenGL ES provides drawing and operations of 2D and 3D graphics in an application. The SQLite provides a lightweight relational database for an application of the electronic device.

The hardware abstraction layer runs in user space (user space), encapsulates a kernel layer driver, and provides an invocation interface for an upper layer.

The kernel layer is a layer between hardware and software. The kernel layer includes at least a display driver, a camera driver, an audio driver, and a sensor driver.

FIG. 3B is a software block diagram according to an embodiment of this application. The software block diagram may include the mobile phone 100 and the server 30. The mobile phone 100 may include a real-time user interaction module (which may also be referred to as a granularity adjustment module) and a display module. The server 30 may include a topic generation module.

The real-time user interaction module is used by a user to adjust a topic granularity by tapping a "+" or "-" control or inputting a granularity value or the like on the mobile phone 100. The display module is configured to display topic content corresponding to the topic granularity. For example, after the user adjusts a topic granularity magnitude via the real-time interaction module, the server 30 returns, to the mobile phone 100, topic content whose topic granularity magnitude is adjusted, and the mobile phone 100 may display the topic content whose topic granularity magnitude is adjusted. The topic generation module is configured to send a topic granularity adjustment request message to the server 30 after the user adjusts the topic granularity magnitude via the real-time interaction module. The server 30 generates, based on the topic granularity adjustment request message, the topic content that is at the corresponding granularity magnitude.

In the following embodiments, an example in which an application is in the architecture of the mobile phone 100 shown in FIG. 2 is used for description.

In addition, in the following embodiments, "at least one" means one or more, and "a plurality of" means two or more. In addition, it should be understood that, in descriptions of this application, terms such as "first" and "second" are merely used for a purpose of distinguishing between descriptions.

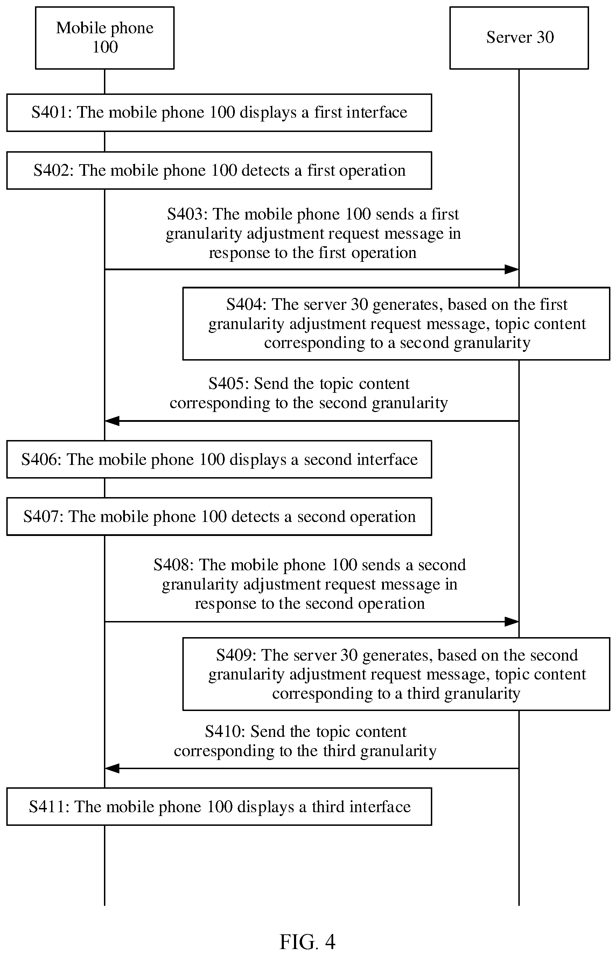

FIG. 4 is a flowchart of a topic content display method according to an embodiment of this application. As shown in FIG. 4, the method may include the following steps.

S401: The mobile phone 100 displays a first interface.

The first interface is an interface of a news APP. The first interface may include a first topic and a granularity adjustment control. In addition, a granularity magnitude of the first topic is a first granularity. For example, the granularity adjustment control may include "+" and "-" controls, or may be an edit box input control, or may be a slider bar control. This is not limited in this application.

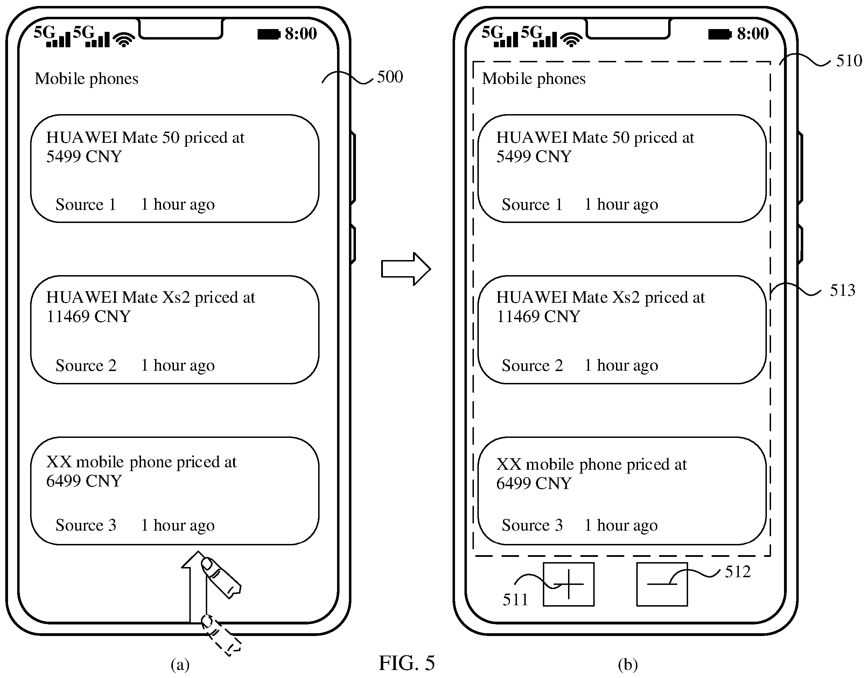

In some embodiments, the granularity adjustment control may be triggered, through a user operation, to be displayed in the first interface. For example, as shown in FIG. 5, it is assumed that the mobile phone 100 displays an interface 500 shown in (a) in FIG. 5. A user may perform a gesture operation on the interface 500, for example, a bottom-up slide operation that is shown in the figure and that is performed by a finger along an edge of the display. Then, in response to the gesture operation, the mobile phone 100 may display an interface 510 shown in (b) in FIG. 5. The interface 510 may include a granularity increasing control "+" 511, a granularity decreasing control "-" 512, and a first topic 513. It should be understood that the interface 510 may be understood as the first interface in S401. Certainly, the user may alternatively hide the granularity adjustment control through an operation in a direction opposite to the foregoing operation. For example, the finger of the user may slide from top to bottom at a location, as a start point, that is in the diagram shown in (b) in FIG. 5 and that is close to the lower edge of the display but is at a specific distance from the lower edge of the display, and then, in response to the gesture operation, the mobile phone 100 may hide the granularity increasing control "+" 511 and the granularity decreasing control "- " 512.

It should be understood that the gesture operation shown in the figure is merely an example, and the gesture operation may alternatively be another operation. For example, the gesture operation may be a bottom-up slide operation performed by the user from any location of the lower edge of the display as a start point, for example, a bottom-up slide operation from a location, as a start point, that is close to the lower edge of the display but is at a specific distance from the lower edge. In some other embodiments, the gesture operation may alternatively be a bottom-up slide operation with specific pressure from the lower edge of the display. Certainly, the gesture operation may alternatively be a left-to-right slide operation from the left edge of the display, a right-to-left slide operation from the right edge of the display, or the like.

In still some other embodiments, the granularity adjustment control may alternatively be triggered for display in a manner like drawing a circle on the display, or may be triggered for display by using a voice, and so on. This is not limited in this application.

In another embodiment, the user may trigger displaying of different granularity adjustment controls through different gesture operations. For example, the user may trigger displaying of the "+" and "-" controls through a bottom-up slide operation along the lower edge of the display, trigger displaying of the edit box input control in a manner of a double tap on the display, and trigger displaying of the slider bar control through a left-to-right slide operation along the left edge of the display. Certainly, the foregoing operation is merely an example. During actual product implementation, at least one granularity adjustment control may alternatively be displayed in the interface. The user may select the granularity adjustment control based on a preference of the user, and further adjust the granularity magnitude. This is not specifically limited in this application.

In some embodiments, before the mobile phone 100 displays the first interface, the mobile phone 100 may receive topic content that is sent by the server 30 and whose granularity magnitude is the first granularity. Then, the mobile phone 100 may display the first interface corresponding to the topic content that is at the first granularity. The topic content at the first granularity is generated by the server 30 according to a topic generation algorithm.

The following describes in detail a process of generating the topic content that is at the first granularity.

A search is used as an example. It is assumed that the user searches, in a search engine of the mobile phone 100, for a news topic that the user is interested in, for example, inputs "Digital products" in the search engine. In this case, the mobile phone 100 may send the search word "Digital products" of the user to the server 30. Then, the server 30 may find, in a preset topic, a topic related to the search word "Digital products" and return the topic to the user, for example, topic content returned to the user is content of a "Mobile phones" topic. Then, the mobile phone 100 may display a page of the "Mobile phones" topic. It should be understood that a granularity corresponding to the "Mobile phones" topic may be understood as a default granularity (which may also be referred to as an initial granularity or a first granularity), and the default granularity may be pre-configured by a developer. In other words, when searching for the "Digital products" topic, the user accesses the page of the "Mobile phones" topic by default. Certainly, the developer may alternatively configure a rule as follows: When searching for the "Digital products" topic, the user accesses a page of a "computer" topic by default, or the like. This is not limited in this application.

It should be understood that, in the foregoing example, an example in which the news topic is searched in the search engine is merely used for description. In embodiments of this application, a manner of accessing a page of the news topic is not limited. For example, the page of the news topic may alternatively be accessed by tapping a notification link received on a mobile phone, or the page of the news topic may alternatively be accessed on a leftmost screen over a real-time hotspot.

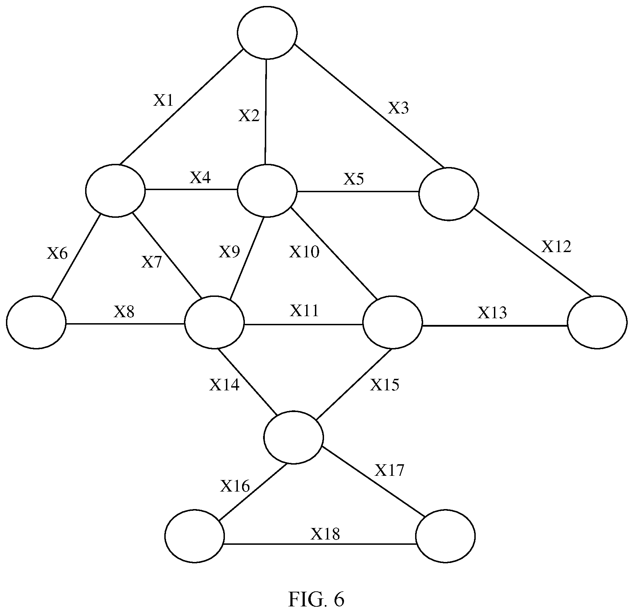

The server 30 may collect text data of news in real time, and perform steps such as natural language training and reasoning on the real-time text data of the news to obtain a semantic vector of the corresponding news, then calculate a similarity between every two pieces of news in sequence, and construct a node relationship diagram based on the similarity. For example, for the node relationship diagram, refer to FIG. 6. Each node in the node relationship diagram indicates each piece of news, a side between nodes indicates a similarity between two pieces of news, and a set of the nodes indicates a topic of the news. The set is generated in real time based on the granularity magnitude. A larger granularity indicates more topics and a larger quantity of sets. A smaller quantity of nodes included in a single set indicates a smaller quantity of pieces of news in a topic and a finer topic granularity. It should be understood that the node relationship diagram in FIG. 6 is a relationship diagram of a part of nodes. Each circle shown in the figure indicates one node, and X1 to X18 indicate values of similarities between every two pieces of news. Certainly, X1 to X18 are merely examples. This embodiment of this application is not limited to the foregoing examples. For example, the value may alternatively be expressed as A or B. This is not limited.

After the server 30 receives the search word "Digital products" of the user sent by the mobile phone 100, the server 30 may find a default granularity in the node relationship diagram, for example, a node set of the "Mobile phones" topic, and then return the node set of the "Mobile phones" topic to the user.

S402: The mobile phone 100 detects a first operation.

The first operation is a gesture operation on the granularity adjustment control. For example, when the granularity adjustment control includes the "+" and "-" controls, the first operation may be a tap operation on the "+" or "-" control; when the granularity adjustment control is the edit box input control, the first operation may be an operation of inputting a granularity magnitude in an edit box; or when the granularity adjustment control is the slider bar control, the first operation may be a left-to-right drag operation or a right-to-left drag operation on a slider bar.

S403: The mobile phone 100 sends a first granularity adjustment request message to the server 30 in response to the first operation.

The first granularity adjustment request message is used to request to change the first topic in the first interface.

For ease of description, in this embodiment of this application, a new granularity obtained through adjustment by the user may be denoted as a "second granularity". A magnitude of the second granularity may be greater than the magnitude of the first granularity, or the magnitude of the second granularity may be less than the magnitude of the first granularity. This is not limited in this application.

In some embodiments, after the user adjusts a topic granularity in the first interface, the mobile phone 100 may send the first granularity adjustment request message to the server 30 in response to the user operation. The first granularity adjustment request message is used to request to change the first topic in the first interface. Correspondingly, the server 30 may increase the topic granularity, so that the topic granularity is finer; or the server 30 decreases the topic granularity, so that the topic granularity is larger.

In this embodiment of this application, the mobile phone 100 may determine, based on the first operation of the user, a new granularity magnitude obtained through adjustment by the user. Then, the mobile phone 100 includes the new granularity magnitude in a granularity adjustment request message and sends the granularity adjustment request message to the server 30. For a specific determining process, refer to the following detailed descriptions provided with reference to a diagram of a user interface. Details are not described herein.

S404: The server 30 generates, based on the first granularity adjustment request message, topic content corresponding to a second granularity.

In some embodiments, the first granularity request message may include the second granularity. After receiving the first granularity adjustment request message, the server 30 may generate, based on the second granularity included in the first granularity adjustment request message, topic content corresponding to a magnitude of the second granularity. For example, it is assumed that the user inputs a granularity magnitude "3" on the mobile phone 100 by using the edit box. In this case, the mobile phone 100 may send the first granularity adjustment request message to the server 30. Correspondingly, the server 30 may receive the first granularity adjustment request message, and then calculate topic content whose granularity magnitude is 3.

S405: The server 30 sends the topic content corresponding to the second granularity to the mobile phone 100.

In some embodiments, after generating, according to the algorithm, the topic content corresponding to the second granularity, the server 30 may send the topic content corresponding to the second granularity to the mobile phone 100, so that the mobile phone 100 displays, on the display, the topic content corresponding to the second granularity.

S406: The mobile phone 100 displays a second interface.

The second interface includes a second topic. The second topic is associated with the first topic. Content in the second interface is the topic content whose granularity magnitude is the second granularity. A topic granularity in the second interface may be larger than the topic granularity in the first interface, or the topic granularity in the second interface may be finer than the topic granularity in the first interface.

The following uses three different granularity adjustment controls as examples to describe an implementation process of the embodiment shown in FIG. 4.

Example 1: The granularity adjustment control includes the "+" and "-" controls.

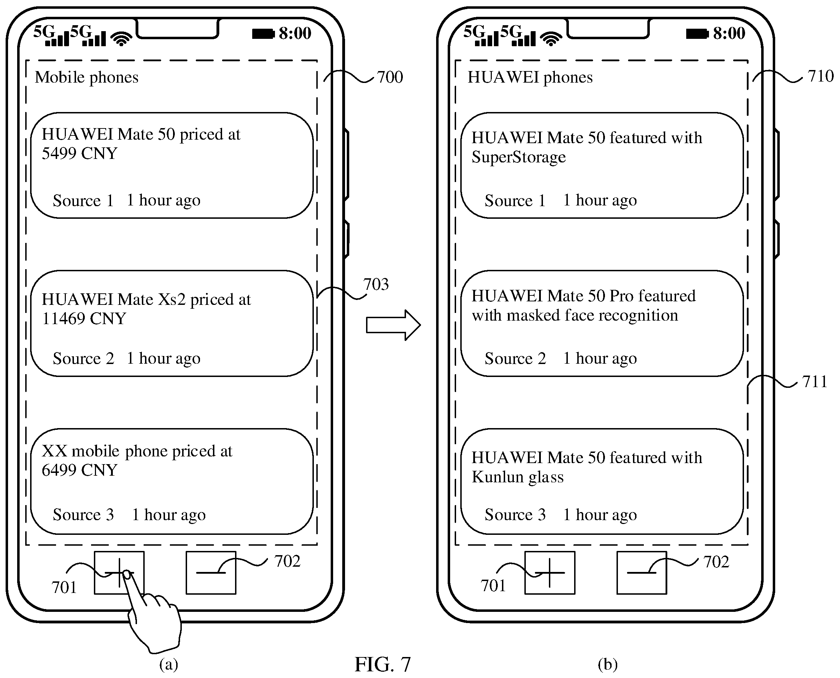

It is assumed that the mobile phone 100 displays an interface 700 that is of the news APP and that is shown in (a) in FIG. 7. The interface 700 may include a granularity increasing control "+" 701, a granularity decreasing control "-" 702, and the first topic, for example, a "Mobile phones" topic 703. The user may adjust the granularity magnitude in the interface 700 by operating the granularity increasing control "+" 701 or the granularity decreasing control "-" 702. For example, the first operation is an operation of tapping the granularity increasing control "+" 701 by the user in the interface 700. After the mobile phone 100 detects the tap operation of the user on the granularity increasing control "+" 701 in the interface 700, the mobile phone 100 may send the first granularity adjustment request message to the server 30 in response to the tap operation. The first granularity adjustment request message is used to request to increase the first granularity.

It is assumed that a granularity magnitude of the first granularity is 2. After the mobile phone 100 detects the tap operation of the user on the granularity increasing control "+" 701 in the interface 700, the mobile phone 100 may increase the granularity magnitude with a fixed amplitude. For example, in this case, the granularity magnitude may be increased from 2 to 4. In other words, the granularity magnitude may be changed from the first granularity to the second granularity, for example, increased from 2 to 4. It should be understood that the fixed amplitude is 2, or the fixed amplitude may be 1, or the like. This is not limited in this application.

Correspondingly, after receiving the first granularity adjustment request message, the server 30 may recalculate a set relationship in FIG. 6. When a quantity of sets changes, a quantity of corresponding topics changes, and a granularity of a single topic changes accordingly. It should be understood that the user operation changes only the granularity magnitude, and the granularity magnitude affects calculation of the set in FIG. 6, and does not change a point and the side in the node relationship diagram in FIG. 6. The server 30 may use a crawler to crawl new news data in real time. The node relationship diagram is reconstructed only after the crawler crawls the new news data. For example, it is assumed that the page of the "Mobile phones" topic is displayed in the interface 700. After the tap operation of the user on the granularity increasing control "+" 701 in the interface 700 is performed, the server 30 may return, to the mobile phone 100, a topic whose granularity magnitude is 4, for example, return a "HUAWEI phones" topic.

After the server 30 sends, to the mobile phone 100, the topic content that is at the second granularity, for example, content of the "HUAWEI phones" topic, the mobile phone 100 may display an interface 710 shown in (b) in FIG. 7. The interface 710 may include the second topic, for example, a "HUAWEI phones" topic 711 shown in the figure. The granularity of the topic content displayed in the interface 710 is greater than the granularity of the topic content displayed in the interface 700. The topic content in the interface 710 is more specific than the topic content displayed in the interface 700. In addition, the interface 710 may include the granularity increasing control "+" 701 and a granularity decreasing control "-" 702. Based on a requirement of the user, the user may continue to adjust the granularity magnitude of the topic in the interface 710 by operating the granularity increasing control "+" 701 or the granularity decreasing control "-" 702.

It should be understood that the granularity increasing control "+" 701 and the granularity decreasing control "-" 702 that are included in the interface 710 may be always displayed in the interface, or may be hidden by the user through a gesture operation. Certainly, the granularity increasing control "+" 701 and the granularity decreasing control "-" 702 may alternatively not be displayed in the interface 710. This is not limited in this application.

Example 2: The granularity adjustment control is the edit box input control.

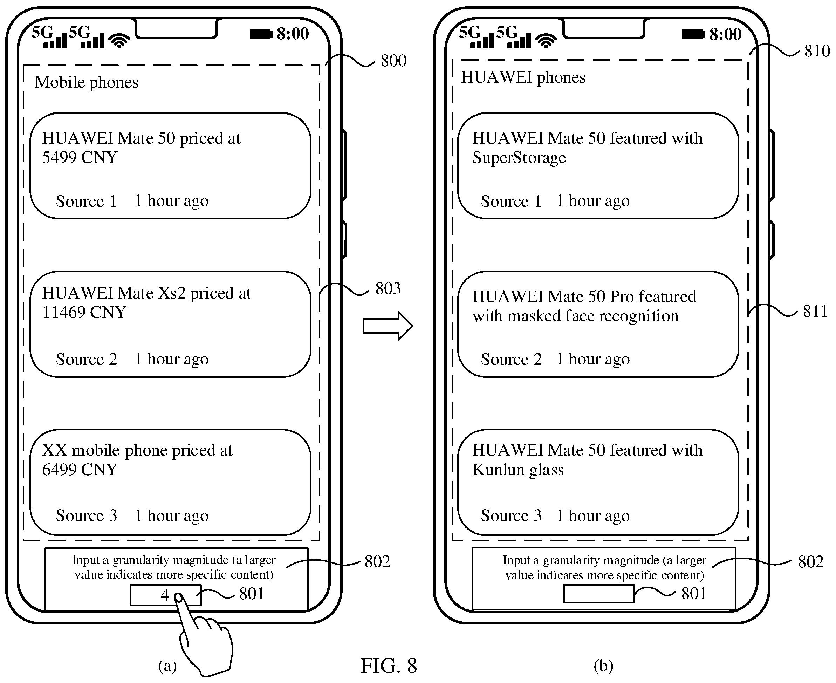

It is assumed that the mobile phone 100 displays an interface 800 that is of the news APP and that is shown in (a) in FIG. 8. The interface 800 may include an edit box input control 801, prompt information 802, and the first topic, for example, a "Mobile phones" topic 803. The prompt information 802 may be used to prompt the user with a relationship between an input value and topic content. For example, the prompt information 802 may be: Input a granularity magnitude (a larger value indicates more specific content). Then, the user may adjust the granularity magnitude by inputting a value of the granularity magnitude in the edit box input control 801 in the interface 800. For example, the first operation is an operation of inputting a value "4" by the user in the edit box input control 801 in the interface 800. After the mobile phone 100 detects the input operation of the user on the edit box input control 801, the mobile phone 100 may send the first granularity adjustment request message to the server 30 in response to the input operation. The first granularity adjustment request message is used to request the server 30 to change the magnitude of the first granularity.

It is assumed that a granularity magnitude of the "Mobile phones" topic displayed in the interface 800 is 2. After the user inputs the value in the edit box input control 801, for example, inputs the value 4, the granularity magnitude may be increased from 2 to 4.

In a possible implementation, when the value input by the user in the edit box control is large, normalization processing may be performed on the value. For example, it is assumed that the value input by the user is 500, normalization processing may be performed on the value 500. For example, the granularity magnitude may be changed from 2 to 16. In other words, a granularity magnitude corresponding to the value 500 is 16. Certainly, the foregoing value on which normalization processing is performed is merely an example. In addition, normalized processing is only a possible implementation. For example, normalized processing may not be performed. This is not limited in this application.

Correspondingly, after receiving the first granularity adjustment request message, the server 30 may recalculate a set relationship in FIG. 6. For the process, refer to the detailed descriptions in the embodiment shown in FIG. 5. Details are not described herein again. For example, it is assumed that a page of the "Mobile phones" topic is displayed in the interface 800. After the user inputs the value "4" in the edit box input control 801 in the interface 800, the server 30 may return, to the mobile phone 100, a topic whose granularity magnitude is 4, for example, a "HUAWEI phones" topic.

After the server 30 sends, to the mobile phone 100, the topic content that is at the second granularity, for example, content of the "HUAWEI phones" topic, the mobile phone 100 may display an interface 810 shown in (b) in FIG. 8. The interface 810 may include the second topic, for example, a "HUAWEI phones" topic 811 shown in the figure. The granularity of the topic content displayed in the interface 810 is greater than the granularity of the topic content displayed in the interface 800. The topic content in the interface 810 is more specific than the topic content displayed in the interface 800. In addition, the interface 810 may include the edit box input control 801 and the prompt information 802. Based on a requirement of the user, the user may continue to adjust the granularity magnitude of the topic in the interface 810 by operating the edit box input control 801.

It should be understood that the edit box input control 801 and the prompt information 802 that are included in the interface 810 may be always displayed in the interface, or may be hidden by the user through a gesture operation. Certainly, the edit box input control 801 and the prompt information 802 may alternatively not be displayed in the interface 810. This is not limited in this application.

Example 3: The granularity adjustment control is a slider bar control.

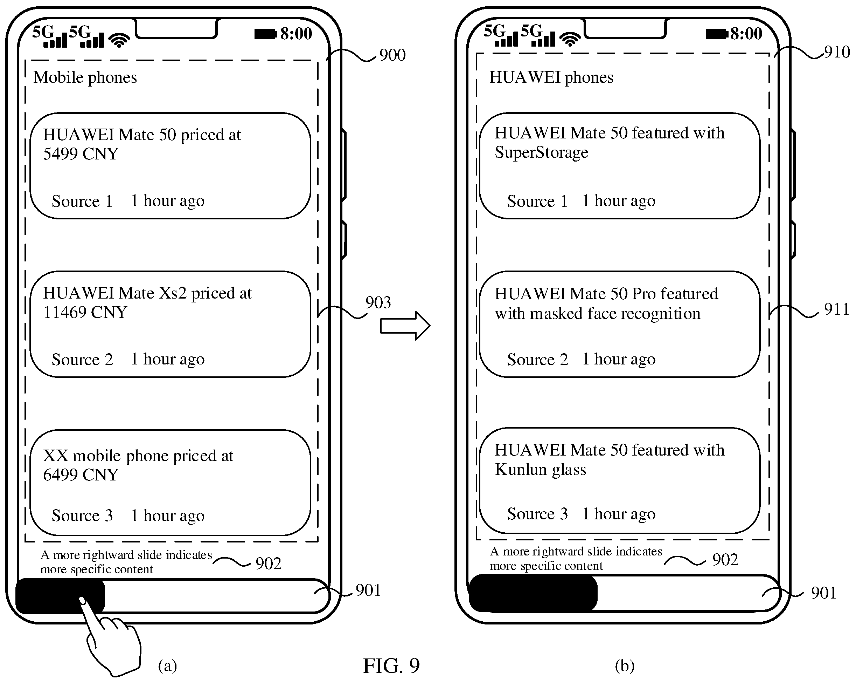

It is assumed that the mobile phone 100 displays an interface 900 that is of the news APP and that is shown in (a) in FIG. 9. The interface 900 may include a slider bar control 901, prompt information 902, and the first topic, for example, a "Mobile phones" topic 903. The prompt information 902 may be used to prompt the user of a relationship between a location of the slider bar and a specific degree of topic content. For example, the prompt information 902 may be: A more rightward slide indicates more specific content. Then, the user may adjust the granularity magnitude in the interface 900 by dragging the slider bar control 901. For example, the first operation is a drag operation of the user on the slider bar control 901 in the interface 900. After the mobile phone 100 detects the drag operation on the drag bar control 901, for example, a left-to-right drag operation, the mobile phone 100 may send the first granularity adjustment request message to the server 30 in response to the drag operation. The first granularity adjustment request message is used to request to change the magnitude of the first granularity.

It should be understood that, in this embodiment of this application, after the user drags the slider bar from left to right, the granularity may be gradually increased; or after the user drags the slider bar from right to left, the granularity may be gradually decreased. Certainly, the foregoing is merely an example. Alternatively, after the user drags the slider bar from left to right, the granularity may be gradually decreased; or after the user drags the slider bar from right to left, the granularity may be gradually increased. This is not limited in this application.

It is assumed that a granularity magnitude of the first granularity is 2. After the user performs the left-to-right drag operation on the slide bar, the mobile phone 100 may obtain a drag distance of dragging the slide bar by the user, and then calculate a magnitude of the second granularity based on the drag distance. For example, the magnitude that is of the second granularity and that is obtained through calculation is 4. Certainly, there may be a correspondence between the drag distance of the slider bar and the granularity magnitude. In the correspondence, the drag distance of the slider bar may be a range, or may be a fixed value. This is not limited in this application.

Correspondingly, after receiving the first granularity adjustment request message, the server 30 may recalculate a set relationship in FIG. 6. For the process, refer to the detailed descriptions in the embodiment shown in FIG. 5. Details are not described herein again. For example, it is assumed that a page of the "Mobile phones" topic is displayed in the interface 900. The user drags the slider bar control 901 in the interface 900 to slide for a specific distance, and a new granularity magnitude is 4. Then, the server 30 may return, to the mobile phone 100, a topic whose granularity magnitude is 4, for example, a "HUAWEI phones" topic.

After the server 30 sends, to the mobile phone 100, the topic content that is at the second granularity, for example, content of the "HUAWEI phones" topic, the mobile phone 100 may display an interface 910 shown in (b) in FIG. 9. The interface 910 may include the second topic, for example, a "HUAWEI phones" topic 911 shown in the figure. The granularity of the topic content displayed in the interface 910 is greater than the granularity of the topic content displayed in the interface 900. The topic content in the interface 910 is more specific than the topic content displayed in the interface 900. In addition, the interface 910 may include the slider bar control 901 and the prompt information 902. Based on a requirement of the user, the user may continue to adjust the granularity magnitude of the topic in the interface 910 by operating the slider bar control 901.

It should be understood that the slider bar control 901 and the prompt information 902 that are included in the interface 910 may be always displayed in the interface, or may be hidden by the user through a gesture operation. Certainly, the slider bar control 901 and the prompt information 902 may alternatively not be displayed in the interface 910. This is not limited in this application.

Further, after the mobile phone 100 displays the second interface, if the user wants to continue to browse a finer or wider topic, the user may continue to adjust the topic granularity in the second interface. Optionally, after S406, the method may further include the following step.

S407: The mobile phone 100 detects a second operation.

The second operation is a gesture operation on the granularity adjustment control. For example, when the granularity adjustment control includes the "+" and "-" controls, the second operation may be a tap operation on the "+" or "-" control; when the granularity adjustment control is the edit box input control, the second operation may be an operation of inputting a granularity magnitude in the edit box; or when the granularity adjustment control is the slider bar control, the second operation may be a left-to-right drag operation or a right-to-left drag operation on the slider bar.

S408: The mobile phone 100 sends a second granularity adjustment request message to the server 30 in response to the second operation.

For ease of description, in this embodiment of this application, a new granularity obtained after the user continues to adjust the granularity magnitude in the second interface may be denoted as a "third granularity".

The second granularity adjustment request message is used to request to change the second topic in the second interface.

S409: The server 30 generates, based on the second granularity adjustment request message, topic content corresponding to the third granularity.

A magnitude of the third granularity may be greater than the magnitude of the second granularity, or the magnitude of the third granularity may be less than the magnitude of the second granularity. This is not limited in this application. Certainly, a relationship between the magnitude of the third granularity and the magnitude of the first granularity is not specifically limited in embodiments of this application either.

S410: The server 30 sends the topic content corresponding to the third granularity to the mobile phone 100.

S411: The mobile phone 100 displays a third interface.

A topic granularity in the third interface may be larger than the topic granularity in the second interface, or the topic granularity in the third interface may be finer than the topic granularity in the second interface.

It should be understood that an implementation process of steps S407 to S411 is similar to the implementation process of steps S402 to S406. For details, refer to the detailed descriptions in S402 to S406. Details are not described herein again.

According to the foregoing embodiments, the user can freely adjust a granularity magnitude of a topic in real time. Then, after the user adjusts the granularity magnitude, the server can generate topic content corresponding to the granularity magnitude, and return the topic content to the user in real time. This implements update of a content interface, to generate news topics that are at different granularities. In addition, the user can customize and adjust the granularity magnitude of the topic in any interaction mode based on the preference of the user, so that user experience is better.

It should be noted that all or a part of the foregoing embodiments provided in this application may be freely and randomly combined. A combined technical solution also falls within the protection scope of this application.

In the foregoing embodiments provided in this application, the method provided in embodiments of this application is described from a perspective in which an electronic device is used as an execution body. To implement functions in the foregoing method provided in embodiments of this application, the electronic device may include a hardware structure and/or a software module, to implement the foregoing functions in a form of the hardware structure, the software module, or a combination of the hardware structure and the software module. Whether a function in the foregoing functions is performed in the form of the hardware structure, the software module, or the combination of the hardware structure and the software module depends on particular applications and design constraints of the technical solutions.

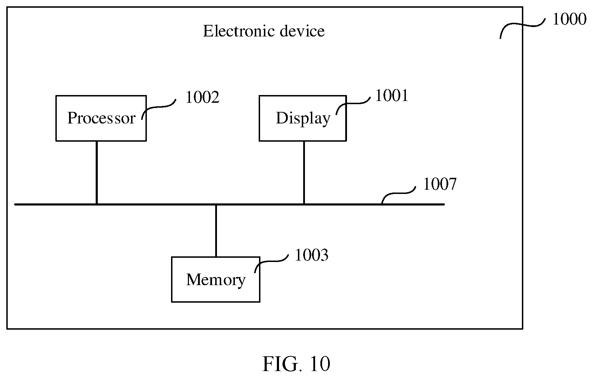

As shown in FIG. 10, some other embodiments of this application disclose an electronic device. The electronic device may be an electronic device having a display. As shown in FIG. 10, the electronic device 1000 includes a display 1001, one or more processors 1002, one or more memories 1003, one or more sensors 1004 (not shown in the figure), a plurality of applications 1005 (not shown in the figure), and one or more computer programs 1006 (not shown in the figure). The foregoing devices may be connected to each other through one or more communication buses 1007.

The display 1001 is configured to display a display interface of the application on the electronic device, or display prompt information. The memory 1003 stores one or more computer programs. When instructions are invoked and executed by the one or more processors 1002, the electronic device 1000 is enabled to perform method steps in the foregoing embodiments.

For example, when the instructions are invoked and executed by the one or more processors 1002, the electronic device 1000 is enabled to perform the following steps: displaying a first interface, where the first interface includes a first topic and a granularity adjustment control; detecting a first operation on the granularity adjustment control; sending a first granularity adjustment request message to a server in response to the first operation, where the first granularity adjustment request message is used to request to change the first topic in the first interface; and receiving content that is in a second interface and that is sent by the server; and displaying the second interface, where the second interface includes a second topic, and the second topic is associated with the first topic.

In this embodiment of this application, the processor 1002 may be a general-purpose processor, a digital signal processor, an application-specific integrated circuit, a field programmable gate array or another programmable logic device, a discrete gate or a transistor logic device, or a discrete hardware component, and may implement or perform the method, steps, and logical block diagram disclosed in embodiments of this application. The general-purpose processor may be a microprocessor, any conventional processor, or the like. The steps of the method disclosed with reference to embodiments of this application may be directly performed by a hardware processor, or may be performed by a combination of hardware in the processor and a software module. The software module may be located in the memory 1003. The processor 1002 reads program instructions in the memory 1003, and completes the steps of the foregoing method in combination with hardware of the processor.

In this embodiment of this application, the memory 1003 may be a non-volatile memory, for example, a hard disk drive (hard disk drive, HDD) or a solid-state drive (solid-state drive, SSD), or may be a volatile memory (volatile memory), for example, RAM. The memory may alternatively be any other medium that can be configured to carry or store expected program code in a form of an instruction structure or a data structure and that can be accessed by a computer, but is not limited thereto. The memory in this embodiment of this application may alternatively be a circuit or any other apparatus that can implement a storage function, and is configured to store instructions and/or data.

A person skilled in the art may clearly understand that, for convenience and brevity of description, for a specific working process of the foregoing apparatus and unit, refer to a corresponding process in the foregoing method embodiment. Details are not described herein.

Based on the foregoing embodiments, this application further provides a computer storage medium. The computer storage medium stores a computer program. When the computer program is executed by a computer, the computer is enabled to perform the method provided in the foregoing embodiments.

An embodiment of this application further provides a computer program product including instructions. When the computer program product runs on a computer, the computer is enabled to perform the method provided in the foregoing embodiments.

Embodiments of this application are described with reference to the flowcharts and/or block diagrams of the method, the device (system), and the computer program product according to embodiments of this application. It should be understood that instructions may be used to implement each process and/or each block in the flowcharts and/or the block diagrams and a combination of the process and/or the block in the flowcharts and/or the block diagrams. These instructions may be provided for a general-purpose computer, a dedicated computer, an embedded processor, or a processor of another programmable data processing device to generate a machine, so that the instructions executed by the computer or the processor of the another programmable data processing device generate an apparatus for implementing a specified function in one or more procedures in the flowcharts and/or a specified function in one or more blocks in the block diagrams.

These computer program instructions may alternatively be stored in a computer-readable memory that can indicate a computer or another programmable data processing device to work in a specific manner, so that the instructions stored in the computer-readable memory generate an artifact that includes an instruction apparatus. The instruction apparatus implements a specified function in one or more procedures in the flowcharts and/or in one or more blocks in the block diagrams.

These computer program instructions may alternatively be loaded onto a computer or another programmable data processing device, so that a series of operations and steps are performed on the computer or the another programmable device to generate computer-implemented processing. In this way, the instructions executed on the computer or the another programmable device provide steps for implementing a specified function in one or more procedures in the flowcharts and/or a specified function in one or more blocks in the block diagrams.

## Claims

1. A topic content display method, comprising:
displaying, by an electronic device, a first interface, wherein the first interface comprises a first topic and a granularity adjustment control;
detecting, by the electronic device, a first operation on the granularity adjustment control;
sending, by the electronic device, a first granularity adjustment request message to a server in response to the first operation, wherein the first granularity adjustment request message is used to request to change the first topic in the first interface; and
receiving, by the electronic device, content that is in a second interface and that is sent by the server, and displaying the second interface, wherein the second interface comprises a second topic, and the second topic is associated with the first topic.

2. The method according to claim 1, wherein a granularity of the first topic is a first granularity, a granularity of the second topic is a second granularity, and the second granularity is greater than the first granularity, or the second granularity is less than the first granularity.

3. The method according to claim 2, wherein the first granularity request message comprises the second granularity; and
before sending, by the electronic device, the first granularity adjustment request message to the server, the method further comprises:
determining, by the electronic device, a magnitude of the second granularity based on the first operation.

4. The method according to any one of claims 1 to 3, wherein the second interface comprises the granularity adjustment control.

5. The method according to claim 4, wherein after displaying, by the electronic device, the second interface, the method further comprises:
detecting, by the electronic device, a second operation on the granularity adjustment control;
sending, by the electronic device, a second granularity adjustment request message to the server in response to the second operation, wherein the second granularity adjustment request message is used to request to change the second topic in the second interface; and
receiving, by the electronic device, content that is in a third interface and that is sent by the server, and displaying the third interface, wherein the third interface comprises a third topic, and the third topic is associated with the second topic.

6. The method according to claim 5, wherein a granularity of the third topic is a third granularity; and
before sending, by the electronic device, the second granularity adjustment request message to the server, the method further comprises:
determining, by the electronic device, a magnitude of the third granularity based on the second operation.

7. The method according to any one of claims 1 to 6, wherein before displaying, by the electronic device, the first interface, the method further comprises:
receiving, by the electronic device, content that is of the first topic and that is sent by the server.

8. The method according to any one of claims 1 to 7, wherein before displaying, by the electronic device, the first interface, the method further comprises:
detecting, by the electronic device, a third operation, wherein the third operation is used to trigger displaying of the granularity adjustment control; and
displaying, by the electronic device, the granularity adjustment control in the first interface in response to the third operation.

9. The method according to any one of claims 1 to 8, wherein the granularity adjustment control is at least one of the following controls:
a granularity increasing control and a granularity decreasing control, wherein the granularity increasing control is used to increase a topic granularity, and the granularity decreasing control is used to decrease the topic granularity; or
an edit box input control, wherein the edit box input control is used to input a granularity value; or
a slider bar control, wherein the slider bar control is used to increase or decrease the topic granularity through sliding.

10. An electronic device, wherein the electronic device comprises a display, one or more processors, one or more memories, one or more sensors, a plurality of applications, and one or more computer programs; and
the one or more computer programs are stored in the one or more memories, the one or more computer programs comprise instructions, and when the instructions are invoked and executed by the one or more processors, the electronic device is enabled to perform the method according to any one of claims 1 to 9.

11. A computer-readable storage medium, wherein the computer-readable storage medium stores instructions, and when the instructions are run on an electronic device, the electronic device is enabled to perform the method according to any one of claims 1 to 9.
